## Europäisches Patentamt
## European Patent Office
## Office européen des brevets

(11) Publication number: **0 040 066**
**B1**

(12) **EUROPEAN PATENT SPECIFICATION**

(45) Date of publication of patent specification: **12.12.84**

(51) Int. Cl.³: **G 11 B 5/52, G 11 B 5/55**

(21) Application number: **81302052.6**

(22) Date of filing: **08.05.81**

(54) **Tracking control arrangements for magnetic reproducing devices.**

(30) Priority: **10.05.80 JP 61887/80**

(43) Date of publication of application:
**18.11.81 Bulletin 81/46**

(45) Publication of the grant of the patent:
**12.12.84 Bulletin 84/50**

(84) Designated Contracting States:
**AT DE FR GB NL**

(56) References cited:
**DE-A-2 838 003**
**GB-A-2 005 458**

**Patents Abstracts of Japan Vol. 1, No. 124, 18 October 1977, page 5310E77**

(73) Proprietor: **SONY CORPORATION**
**7-35 Kitashinagawa 6-Chome Shinagawa-ku Tokyo 141 (JP)**

(72) Inventor: **Moriya, Ryusuke**
**467-3 Ojiri**
**Hadano-shi Kanagawa-ken (JP)**
Inventor: **Eguchi, Takeo**
**618-41 Minamiyana**
**Hadano-shi Kanagawa-ken (JP)**
Inventor: **Ohba, Takeo**
**7-19-3 Kamitsuruma**
**Sagamihara-shi Kanagawa-ken (JP)**

(74) Representative: **Thomas, Christopher Hugo et al**
**D Young & Co 10 Staple Inn**
**London WC1V 7RD (GB)**

## Description

This invention relates to tracking control arrangements for magnetic reproducing devices.

Generally, in a magnetic recording and reproducing device such as a video tape recorder (VTR), the quality of the reproduced signal deteriorates if there is a positional deviation between the recording track produced as a recording magnetic head traces a magnetic recording medium at the time of recording, and the track of tracing of a reproducing magnetic head on the medium at the time of reproduction. This is hereinafter referred to as tracking error. To eliminate this tracking error it is necessary to provide tracking control. For example, in a VTR where a video signal is recorded and reproduced using a rotary magnetic head assembly, it has been the practice to effect tracking control by a so-called capstan servo-control of a capstan motor, which drives a magnetic tape at a constant speed, according to the tracking error. In another example, it has been the practice to provide an auto-tracking control by a so-called wobbling or dithering method, in which the position of the reproducing magnetic head is controlled to make the envelope level of the reproduced signal a maximum while giving the reproducing magnetic head slight vibrations.

With the conventional capstan servo-control method, however, optimum reproduction of the video signal may be impossible due to a positional deviation between the control signal track and the video signal track, which may arise in various ways. One possibility is that there is a mounting error which occurs when a control track recording and reproducing head is mounted in a VTR, in which case the problem arises when reproducing signals recorded with a different VTR. Another possibility is that the tape is subject to elongation or contraction due to temperature changes or mechanical actions. Moreover, if the recording tracks are curved, satisfactory capstan servo-control tends to lead to deteriorated quality of the video signal reproduction.

With tracking control by the wobbling method, although it is possible always to trace the centre of the video track correctly, the effective envelope level of the reproduced signal is reduced to about 90% by the wobbling, so that deterioration of the overall signal-to-noise ratio is inevitable.

German Offenlegungsschrift 28 38 003 and UK patent specification 2 005 458A refer to methods of tracking control making use of the phase difference between simultaneously reproduced television signals. In both cases the television signal is recorded in analog form. In German 28 38 003 is disclosed an arrangement as specified in the pre-characterising part of claim 1 of the present application. In UK 2 005 458A is disclosed an arrangement for distributing sampled video signals to a plurality of channels where they are recorded together with horizontal synchronizing signals in parallel tracks.

According to the present invention there is provided a tracking control arrangement for a magnetic reproducing device, the arrangement comprising:

a magnetic tape having slant tracks in which are recorded a television signal including synchronization signals;

drive means for driving said tape;

at least two reproducing magnetic heads for simultaneously scanning different slant tracks recorded on said tape, said reproducing magnetic heads having respective different azimuth angles;

phase detecting means for detecting a phase error between signals reproduced by said two reproducing magnetic heads; and

controlling means for controlling the positions of said tracks and said reproducing magnetic heads relative to one another in dependence on said phase error;

characterised by: a digital television signal including block synchronization signals to be utilized when effecting digital to analog conversion of said digital television signal after reproduction;

said digital television signal having been split into first and second channels for recording simultaneously two channel signals by respective magnetic heads of different azimuth angles, and each said reproducing magnetic head being arranged to reproduce a respective channel;

a first said phase locked loop for forming a first clock signal from said reproduced signal of said first channel;

first means for extracting said block synchronization signals from said reproduced signal of said first channel under control of said first clock signal;

a second said phase locked loop for forming a second clock signal from said reproduced signal of said second channel;

second means for extracting said block synchronization signals from said reproduced signal of said second channel under control of said second clock signal; and

means for supplying said extracted block synchronization signals to said phase detecting means to detect said phase error.

The invention will now be described by way or example with reference to the accompanying drawings, in which:

Figure 1 is a schematic plan view of a rotary magnetic head assembly in one embodiment of the invention;

Figures 2 and 3 are elevational views of respective magnetic heads mounted in the rotary magnetic head assembly of Figure 1;

Figure 4 is a schematic plan view of a magnetic recording pattern;

Figure 5 is a block diagram of a recording arrangement;

Figure 6 is a waveform diagram showing details of sampling of a video signal;

Figure 7 is a diagram showing the arrangement of data for illustrating a method of sampling data error correction;

Figure 8 is a diagram showing sampling data;

Figure 9 is a block diagram of a reproducing arrangement;

Figure 10 is a block diagram of a reproduction processing circuit;

Figure 11 is a diagram illustrating the principles of tracking error detection;

Figure 12 is a block diagram of a tracking control circuit;

Figure 13 is a waveform diagram for illustrating the operation of the tracking control circuit of Figure 12;

Figure 14 is a waveform diagram showing ramp waveform signals used for the tracking control in a special reproducing mode;

Figure 15 is a block diagram of another tracking control circuit;

Figures 16 and 17 are waveform diagrams for illustrating the operation of the tracking control circuit of Figure 15; and

Figure 18 is a block diagram of part of the tracking control circuit of Figure 15.

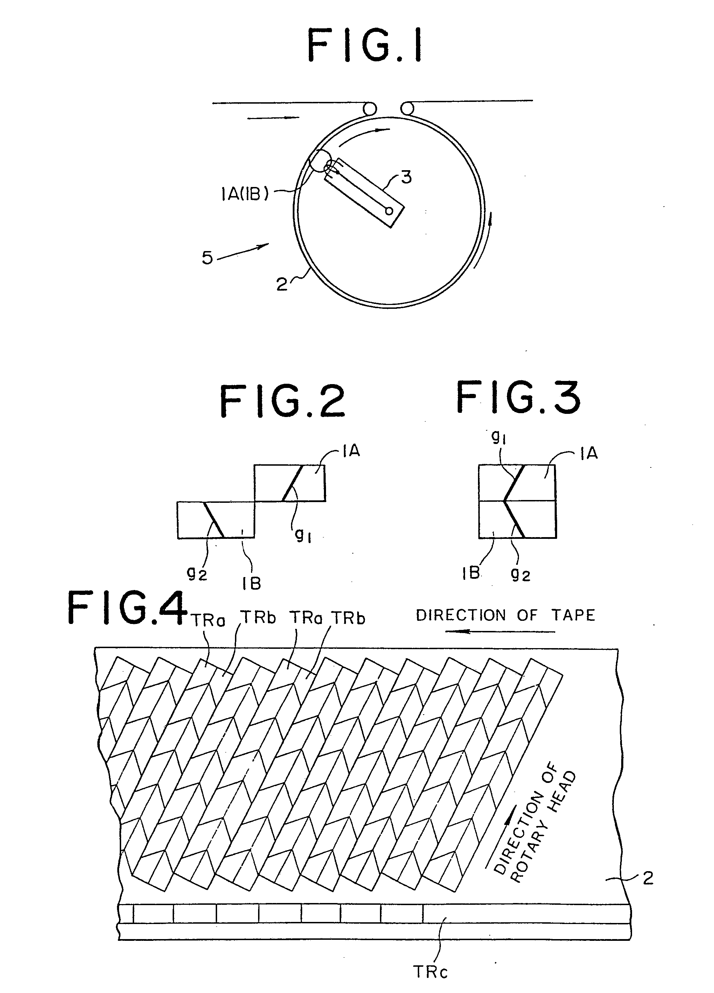

Figure 1 shows a rotary magnetic head assembly 5 which is rotated at the field frequency of a video signal and effects recording and reproduction of an NTSC colour video signal on and from a magnetic recording tape 2 which forms the magnetic recording medium. The rotary magnetic head assembly 5 includes two magnetic heads 1A and 1B mounted at the tip of a bimorph plate 3, and the magnetic heads 1A and 1B are rotated at a constant speed corresponding to the field frequency by rotational force applied to the stem portion of the bimorph plate 3 from a drive motor (not shown). The magnetic tape 2 is wound in an omega shape of substantially 360° about and obliquely with respect to the surface of a drum, along which the magnetic heads 1A and 1B of the rotary magnetic head assembly 5 are rotated, and it is run at a predetermined speed in frictional contact with the magnetic heads 1A and 1B.

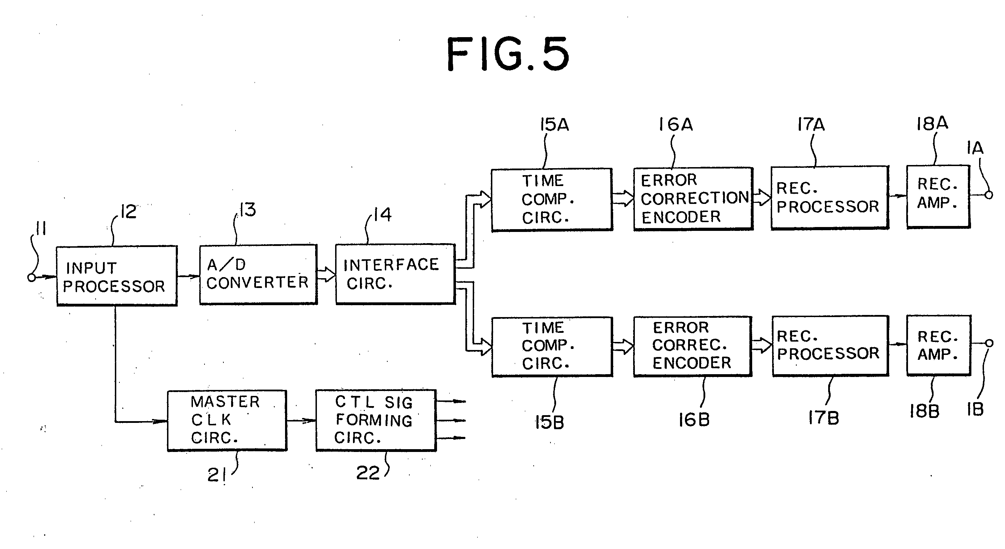

To the bimorph plate 3 is applied a control voltage from a tracking control circuit 50, and the height of the magnetic heads 1A and 1B is controlled according to this control voltage. As shown in Figures 2 and 3, the magnetic heads 1A and 1B have respective magnetic gaps $g_1$ and $g_2$ having different azimuth angles and are disposed in close proximity to each other.

With this arrangement, and as shown in Figure 4, two recording tracks TRa and TRb, parallel to each other and without any intervening space, are formed for each field on and at a predetermined inclination with respect to the length of the magnetic tape 2. In other words, the video signal is recorded by two-channel azimuth recording in the recording tracks TRa and TRb by the magnetic heads 1A and 1B having different azimuth angles. Figure 4 also shows a control track TRc.

The VTR includes a recording arrangement as shown in the block diagram of Figure 5. The NTSC colour video signal is digitized by an analog-to-digital converter 13 to produce a digital signal, which is distributed by an interface circuit 14 to alternate A and B channels in each sampling, for simultaneous recording of two channel digital signals. More particularly, the NTSC colour video signal is supplied from an input terminal 11 to an input processor 12, and the video signal output therefrom, which no longer contains the sync pulse signals and burst signal, is supplied to the analog-to-digital converter 13, while the sync pulse signals and burst signal which are separated in the input processor 12 are supplied to a master clock formation circuit 21. The master clock formation circuit 21 is operated in synchronism with the burst signal to form a clock pulse signal at a frequency of N (N is a positive integer) times the sub-carrier frequency fc. The clock pulse signal thus formed and also the sync pulses are supplied to a control signal forming circuit 22. The control signal forming circuit 22 generates identification signals regarding the lines, fields, frames and tracks, a sampling pulse signal and various timing signals, these signals being supplied to respective circuits.

The analog-to-digital converter 13 samples the colour video signal under the control of the sampling pulse signal supplied from the control signal forming circuit 22 and converts the sampled signal by digitizing into, for example, an 8-bit parallel digital pulse code modulated (PCM) signal.

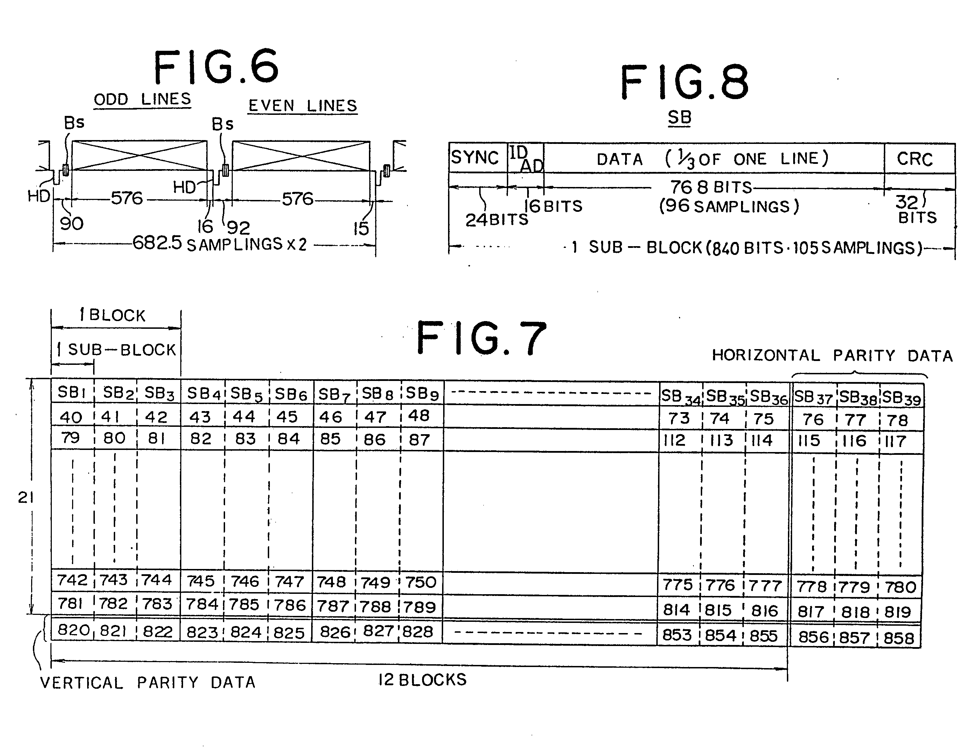

In this embodiment, the integer N is set to 3, that is, the sampling frequency is set to 3fc. Since the sub-carrier frequency fc is

$$fc = \frac{455}{2} fh$$

where fh is the horizontal scanning frequency, this means that the sampling is effected 682.5 times in each horizontal scanning period. However, by taking into consideration the facts that the sampling number has the fraction 0.5, that no sampling is necessary during the horizontal blanking period, and that the digital signal is distributed into two channels, the number of samplings for the effective video region in each horizontal scanning period is set to 576, as shown in Figure 6. Figure 6 also shows a horizontal sync pulse HD, and a burst signal BS, these signals being shown for the sake of illustration although they are actually removed. Also, the horizontal scanning lines, in which the horizontal sync pulse coincidence in phase with the colour sub-carrier, are referred to as odd lines, and the lines 180° out of phase with the colour sub-carrier are referred to as even lines.

Moreover, while one field consists of 262.5 lines, of these lines 10.5 lines are occupied by vertical sync pulses and equalization pulses. In the vertical sync section, test signals such as VIR and VIT signals are inserted, and these signals also thought of as effective data. Accordingly, it is assumed that one field includes 252 effective video lines, with the 12th to 252nd lines being included in the odd field and the 274th to 525th lines being included in the even field.

While the colour video signal is sampled by the analog-to-digital converter 13 on the basis of the aforementioned considerations, the 8-bit parallel digital signal obtained by digitization of each sampling is distributed through the interface circuit 14 to alternate A and B channels for each sampling. More particularly, of the signals obtained from 576 samplings in one line, the digital signal for the odd order number samplings is supplied to an A channel time axis compression circuit 15A, while the digital signal for the even order number samplings is supplied to a B channel time axis compression circuit 15B, and the time axis is compressed to 41/44 as will be described hereinafter. The compressed two channel digital signals are progressively coupled through error correction encoders 16A and 16B and recording processors 17A and 17B for conversion into a signal of the format as shown in Figures 7 and 8.

Figure 7 shows the A and B channel signal included in one field. It consists of 13×22 blocks each consisting of three sub-blocks SB. Each block contains data of the colour video signal for one line. As shown in Figure 8, in one sub-block SB, which contains data for 1/3 of one line, a 24-bit block synchronization signal SYNC, 16 bits occupied by an identification signal ID, and an address signal AD, a 768-bit data (for 96 samplings) and a 32-bit cyclic redundancy check (CRC) code are successively provided in that order. Figure 7 represents the blocks in the form of a matrix for the purpose of facilitating the explanation of the error correction method.

The synchronization signal SYNC is used for extracting the signals ID and AD, the data and the CRC code. The identification signal ID shows that the relevant channel (track) is for the A and the B channel and that the relevant line, field and frame are odd or even, and the address signal AD shows the address (block number) of the relevant sub-block SB. The data is the digitized colour video signal, and the CRC code is used for detection of errors at the time of reproduction.

Since one field period includes 252 effective lines, there are 252 blocks for one field. These 252 blocks are shown in a matrix array of 12×21 as shown in Figure 7. Actually, parity data in the horizontal direction (direction of rows) is added as the 13th column, and parity data in the vertical direction (in the direction of columns) is added as the 22nd row, and the whole array consists of 13×22 blocks.

In this case, denoting the sub-blocks by $SB_1$ to $SB_{858}$, modulo-2 (exclusive-OR) addition in the sub-block unit is effected with respect to the horizontal direction, for instance as

$$SB_1 \oplus SB_4 \oplus SB_7 \oplus \ \ldots \ \oplus SB_{34} = SB_{37}$$

$$SB_2 \oplus SB_5 \oplus SB_8 \oplus \ \ldots \ \oplus SB_{35} = SB_{38}$$

and

$$SB_3 \oplus SB_6 \oplus SB_9 \oplus \ \ldots \ \oplus SB_{36} = SB_{39}$$

for the first line, thus forming the horizontal parity data $SB_{37}$, $SB_{38}$ and $SB_{39}$ for the first line. The mark "$\oplus$" signifies the exclusive-OR function. Likewise, horizontal parity data is derived for the following 2nd to 21st rows.

Moreover, vertical parity data $SB_{820}$ is formed for the first column as

$$SB_1 \oplus SB_{40} \oplus SB_{79} \oplus \ \ldots \ \oplus SB_{781} = SB_{820}$$

and similar vertical parity data is also derived for the following 2nd to 13th columns.

These horizontal and vertical parity data and also the CRC code are used for improving the error correction at the time of reproduction. The parity data consists of 840 bits.

The signal processing for forming the parity data and the CRC code and adding them to the data is carried out in the encoders 16A and 16B. Also, the signal processing for forming the synchronization signal SYNC, the identification signal ID and the address signal AD, and adding them to the data is carried out in the processors 17A and 17B.

In the processors 17A and 17B, a block encoding for converting the bit number for one sample from 8 bits to 10 bits is also effected. In this block encoding, the conversion is effected by selecting $2^8$ codes with a direct current level (DSV) of 0 or close to 0 from the possible 10-bit ($2^{10}$ codes), and converting the selected code into 10-bit codes by establishing a one-to-one correspondence to 10-bit codes such that the DSV of the recorded signal is as close to 0 as possible, that is "0" and "1" appear substantially uniformly. This block encoding is effected because with an ordinary magnetic head the DC portion of a signal cannot be reproduced.

In the processors 17A and 17B, the 10-bit digital signal obtained as a result of the block encoding is subjected to progressive conversion from parallel signal into serial signal form from the sub-block $SB_1$. Also, preamble and postamble signals are added before and after the digital signal for one field. The bit train of the serial signal obtained by the conversion is

$$3fc \times 8 \times \frac{1}{2} \times \frac{44}{41} \times \frac{10}{8}$$

$$= 57.62 \text{ megabits per second (Mb/s)}$$

The serial digital signals are supplied through recording amplifiers 18A and 18B to the respective magnetic heads 1A and 1B of the rotary magnetic head assembly 5.

The rotary magnetic head assembly 5 is operated such that the digital signal for the A channel is recorded as one slant track TRa for each field by the head 1A, while the digital signal for the B channel is recorded as one slant track TRb parallel and contiguous to the track TRa for each field by the head 1B.

In this case, for each channel the recording is basically made in a single head system, so that a blank period is produced in the recording by the heads 1A and 1B. With the SMPTE type "C" format, the period, during which data can be recorded as the individual tracks TRa and TRb, corresponds to about 250 horizontal scanning periods and, if redundancy is taken into consideration, 246 horizontal scanning periods.

Meanwhile, as shown in Figures 7 and 8, the sampling number (that is the bit number) of one sub-block is 105 samples (that is, 840 bits), and one field period includes 858 sub-blocks. Thus, the sampling number for one field is

$$105 \times 858 = 90090 \text{ (samples)}$$

From Figure 6,

$$90090 \div \frac{682.5}{2} = 264$$

that is, the above number of samples corresponds to 264 horizontal scanning periods. This means that data for 264 horizontal scanning periods are recorded during 246 horizontal scanning periods.

Accordingly, the time axis compression circuits 15A and 15B are such that the time axis of the signal is compressed to

$$\frac{246}{264} = \frac{41}{44}$$

Moreover, since the aforementioned various signals are added in the succeeding stage circuits 16A and 16B, and 17A and 17B, the period required for the addition of these signals is provided in the time axis compression circuits 15A and 15B.

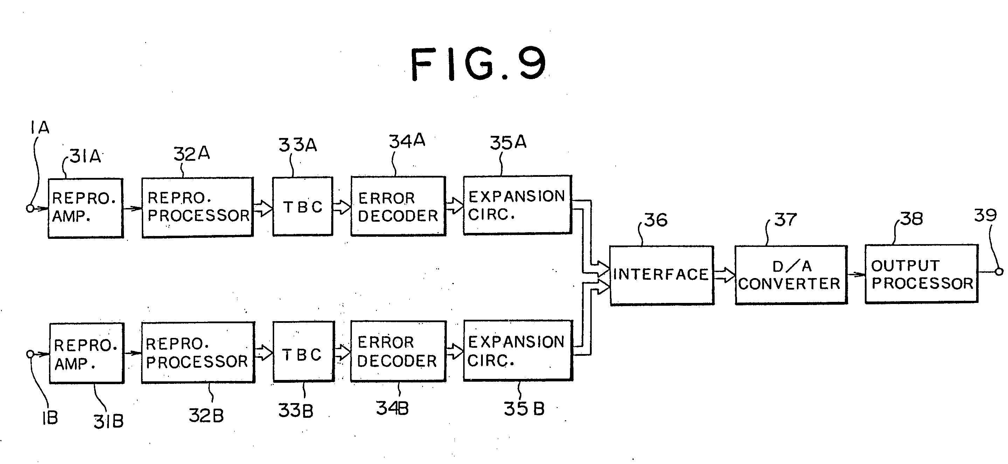

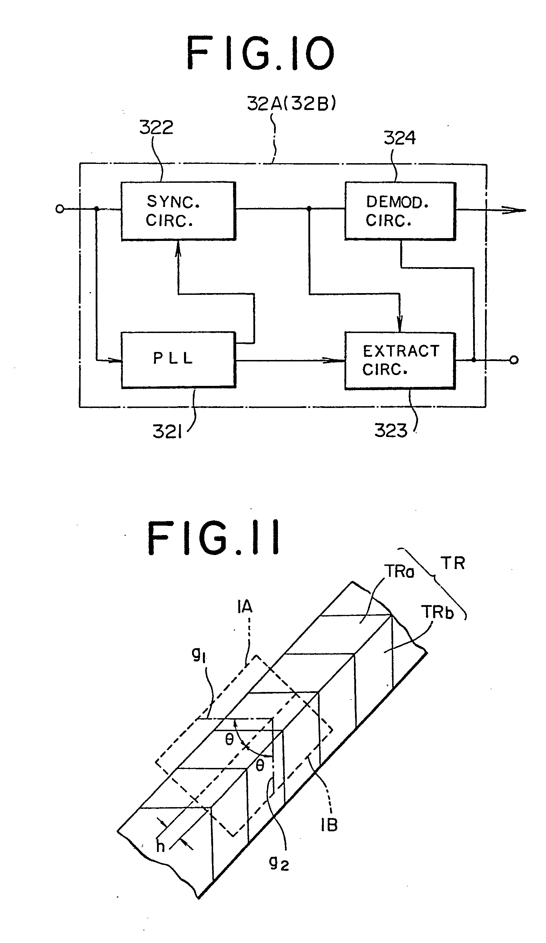

The colour video signal that is digitally recorded in the above way is reproduced in a reproducing system as shown in Figure 9. In this embodiment, the digital signals for the individual channels are simultaneously reproduced from the tracks TRa and TRb by the respective heads 1A and 1B and are supplied through reproducing amplifiers 31A and 31B to reproducing processors 32A and 32B. The reproducing processors 32A and 32B may each be as shown in Figure 10. More particularly, the construction includes a phase locked loop (PLL) 321, which forms a clock signal from the digital signal supplied from the reproducing amplifier 31A or 31B. The clock signal is supplied to a bit synchronization circuit 322, which synchronizes the digital signal supplied from the reproducing amplifier 31A or 31B. The synchronized signal is supplied to a block synchronization signal extracting circuit 323, which extracts the synchronization signal SYNC. The extracted synchronization signal SYNC is coupled to a demodulating circuit 324, where the data are converted from serial to parallel while also the 10-bit code is lock decoded to the initial 8-bit code. The block synchronization signals SYNC obtained from the individual reproducing processors 32A and 32B are supplied to respective signal input terminals 51A and 51B of a tracking control circuit 50 which will be described hereinafter.

The parallel 8-bit digital signals thus obtained are coupled to time base correctors (TBCs) 33A and 33B for removal of the time axis variation components. The TBCs 33A and 33B each include a memory, and the block synchronization signal SYNC is used for the following heading of signal. Also, writing in the memories is effected under the control of the clock signal supplied from the processors 32A and 32B, and the reading from the memories is effected under the control of a clock signal formed by a local synchronizer. In this way, the time axis variation components are removed.

The signals from the TBCs 33A and 33B are supplied to error decoders 34A and 34B. The error decoders 34A and 34B each include a field memory, and data is written in the field memory for each sub-block SB according to the address signal AD. At this time the data errors are corrected for each sub-block SB according to the CRC code and horizontal and vertical parity data. If there are too many errors to be corrected by the CRC code and parity data, the writing of the data of the sub-blocks SB in the field memory is not effected, and thus data one field before is read out.

The data that have been error corrected are supplied to time axis expansion circuit 35A and 35B to recover the original time axis data, which are supplied to an interface 36 and synthesized there to recover the original one channel data. Further, the digital signal thus obtained is coupled to a digital-to-analog converter 37 to recover the analog colour video signal. This analog colour video signal output is coupled to an output processor 38 where it is given sync pulses and burst signal, thus recovering the original colour video signal, which is derived from an output terminal 39.

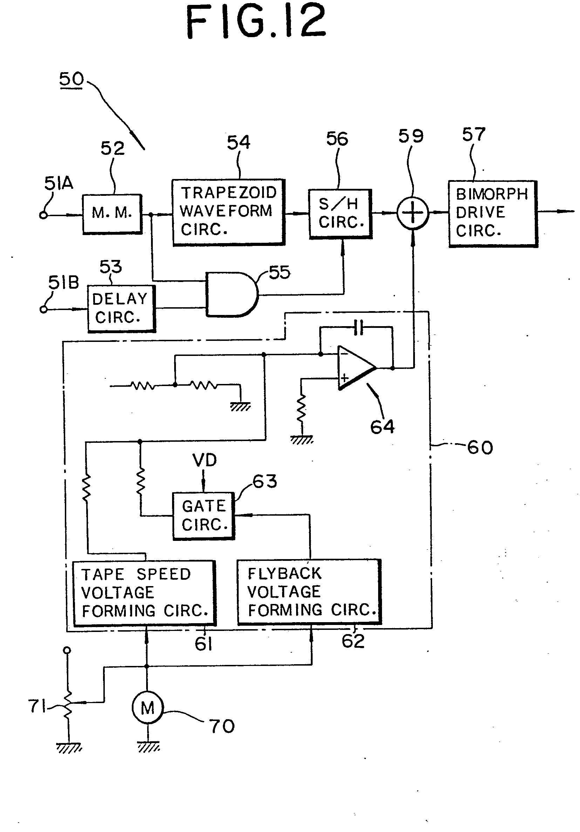

In this embodiment, which is provided with the recording and reproducing arrangements as described above, simultaneous recording and simultaneous reproduction of the two channel digital signals are carried out by the rotary magnetic head assembly 5 having the two magnetic heads 1A and 1B of different azimuth

angles. Thus, if there is a tracking error in the tracks traced by the magnetic heads 1A and 1B at the time of reproduction, a phase difference is produced between the two channel reproduced digital signals. For example, if a tracking error of h in the direction perpendicular to the recording tracks of the magnetic tape 2 is produced by the magnetic heads 1A and 1B which have opposite azimuth angles $\theta$ as shown in Figure 11, in the signals reproduced by the magnetic heads 1A and 1B, one is advanced while the other is retarded by d, where

$$d=h\ \tan\theta$$

and thus a phase difference of 2d, namely

$$2d=2h\ \tan\theta$$

is produced. For example, if the azimuth angle $\theta$ is 7° and the tracking error is —h=10 microns

$$2d=20\ \tan\ 7°=2.46\ \text{microns}$$

This means that a phase difference of 2.46 microns is produced with a tracking error of 10 microns. Where the recording is made at a rate of 50 Mb/s/track, for instance, the aforementioned phase difference corresponds to a time interval of about five clock pulses because one waveform corresponds to about 1 micron (0.5 micron in the case of the clock at 50 MHz). If it is intended to detect this phase difference directly using this clock signal, loss of stability of the tracking control may occur because of the generation of multiple stability points.

Accordingly, in this embodiment, the tracking error is detected for tracking control through the detection of the phase difference between the individual channels of the block synchronization signals SYNC, which are present in the digitally recorded signal for each channel at an interval of dividing one horizontal scanning period (1 H) into two or three sections (about 20 microns).

More particularly, the embodiment is provided with a tracking control circuit 50 as shown in the block diagram of Figure 12 for effecting the control of the tracing position of the magnetic heads 1A and 1B by applying a control voltage to the bimorph plate 3 of the rotary magnetic head assembly 5 during reproduction. In this tracking-control circuit 50, the block synchronization signals SYNC from the reproducing processes 32A and 32B provided in the reproducing arrangement are supplied through the input terminals 51A and 51B to a monostable multivibrator 52 and a delay circuit 53 respectively. The monostable multivibrator 52 is triggered at the leading edge of the block synchronization signal SYNC to produce a pulse signal having a predetermined duration T, which pulse signal is coupled to a trapezoidal-wave-forming circuit 54 and an AND gate 55. The AND gate 55 is enabled by the pulse signal output of the multivibrator 52 to pass the block synchronization signal SYNC from the delay circuit 53 to a sample/hold circuit 56. The trapezoidal-wave-forming circuit 54 forms a trapezoidal waveform signal which rises in synchronism with the leading edge of the pulse signal from the monostable multivibrator 52, and this trapezoidal waveform signal is supplied to the sample/hold circuit 56. The sample/hold circuit 56 samples and holds the leading edge ramp voltage of the trapezoidal waveform signal according to the output signal of the AND gate 55, and supplies a hold voltage $V_h$ corresponding to the phase difference between the individual block synchronization signals $SYNC_1$ and $SYNC_2$ to a bimorph plate drive circuit 57. The phase comparison by the sample/hold circuit 56 mentioned above is effected in synchronism with the output signal from the AND gate 55, and therefore it is arranged such that if a drop-out of signal is detected in the recording or reproducing arrangement, the hold voltage $V_h$ immediately before the dropped-out block synchronization signal, as shown by a dashed line in Figure 13, is continually held. As the bimorph plate drive circuit 57 is driven according to the hold voltage $V_h$ obtained from the sample/hold circuit 56 as described, the bimorph plate 3 carrying the magnetic heads 1A and 1B functions to vary the position of the magnetic heads 1A and 1B such as to eliminate the tracking error. Figure 13 shows the waveforms of various signals mentioned above.

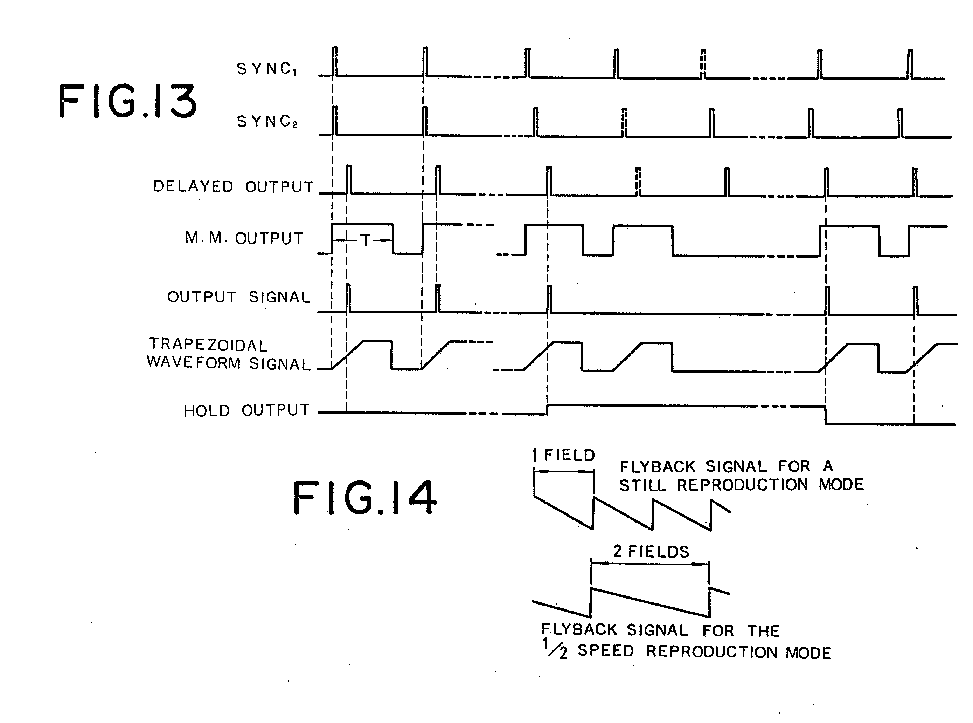

Further, in order to be able to effect the tracking control even in other that the ordinary reproducing mode, for instance in a still reproduction mode or in a slow motion reproduction mode, the tracking control circuit 50 shown in Figure 12 superimposes a ramp waveform signal as shown in Figure 14 on the hold voltage $V_h$ from the sample/hold circuit 56. More particularly, referring to Figure 12, the hold voltage $V_h$ from the sample/hold circuit 56 is supplied through an adder 59, to which a ramp waveform signal from a ramp wave generator 60 is also supplied, to the bimorph plate drive circuit 57.

The ramp wave generator 60 includes a tape speed voltage forming circuit 61 for setting the slope of the ramp waveform signal in accordance with the reproducing mode, a flyback voltage forming circuit 62 for forming a flyback signal at a frequency corresponding to the mode, and a gate circuit 63 and an integrating circuit 64 for generating the ramp waveform signal. The tape speed voltage forming circuit 61 and the flyback voltage forming circuit 62 are operated according to the drive voltage applied to a motor 70 for transporting the magnetic tape 2. The drive voltage applied to the drive motor 70 is set in accordance with the operation mode of the drive motor 70. The flyback voltage forming circuit 62 supplies a flyback signal corresponding to the aforementioned drive voltage, that is, the operation mode, for instance synchronized for every field in the case of still reproduction mode and for every two fields in the case of the 1/2 speed reproduction mode through the gate circuit 63 to the integrating circuit 64. The vertical synchronization signal VD is supplied to the gate circuit 63.

The phase detection may also be obtained with phase detectors other than the charge ramp integration type phase detecting circuit as in the above embodiment.

As has been made apparent from the embodiment described above, simultaneous recording and simultaneous reproduction is effected with respect to a plurality of tracks of different azimuth angles on a magnetic recording medium, and the tape tracking control is effected by the detection of the tracking error from the phase difference of the individual channel reproduced signals obtained at the time of the reproduction, so that it is possible to obtain stable and accurate tracking control with high response speed and without increasing noise.

Now, another embodiment of the invention applied to a capstan servo-control system will be described.

In the following description, parts like those in Figure 12 are indicated by the same reference numerals.

Enclosed within a dashed rectangle 101 is a conventional capstan servo circuit, which includes a monostable multivibrator 102 to which the vertical synchronization signal VD obtained from the reproduced signal is supplied, a CTL amplifier 103 for amplifying the reproduced control signal from a CTL head 107 and a phase comparator 104 for comparing the phase of the output of the CTL amplifier 103 and the phase of the output of the multivibrator 102. The output of the phase comparator 104 is coupled through a low-pass filter 105 to a capstan motor 106 for controlling the rotation thereof. The phase comparator 104, although not shown in detail, has the same construction as the combination of the aforementioned trapezoidal-wave-forming circuit 54 and a sample-hold circuit 56.

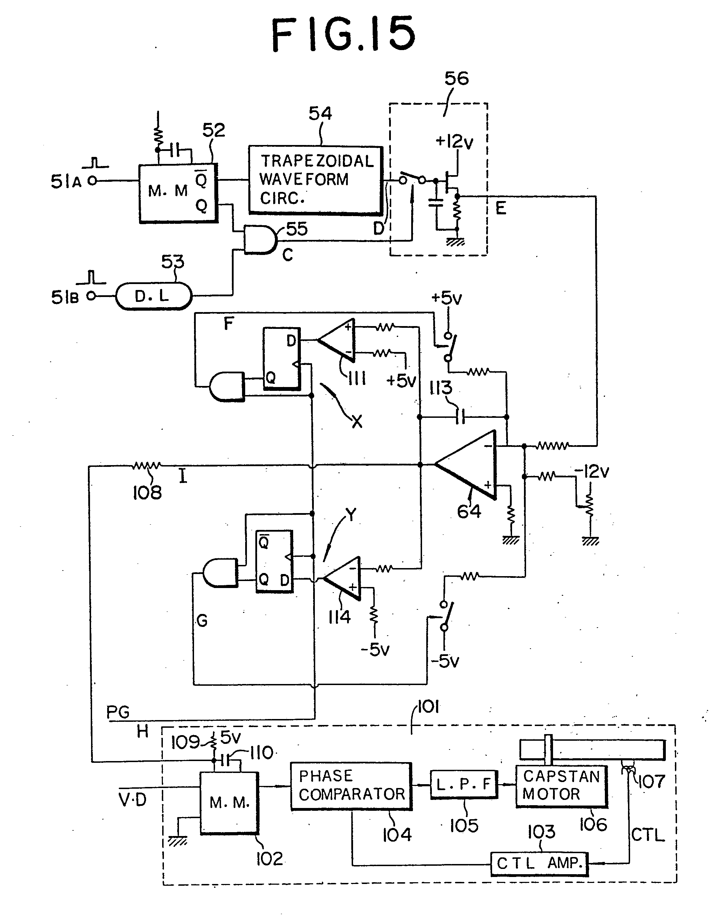

Like the preceding embodiment, the control voltage generated from the integrating circuit 64 is supplied through a resistor 108 shown in Figure 15 to the junction between a resistor 109 and a capacitor 110 which determine the time constant of the monostable multivibrator 102. Thus, the capstan control circuit 101 controls the tape position by adding a signal corresponding to the average tracking error between the two magnetic heads to the phase difference between the CTL signal and the reproduced vertical synchronization signal VD. Thus, it is possible to obtain steady tracking even in cases where errors cannot be followed up with an ordinary capstan servo. Particularly where signals are recorded as digital signal, this arrangement, which effects an average control, results in low signal-to-noise ratio.

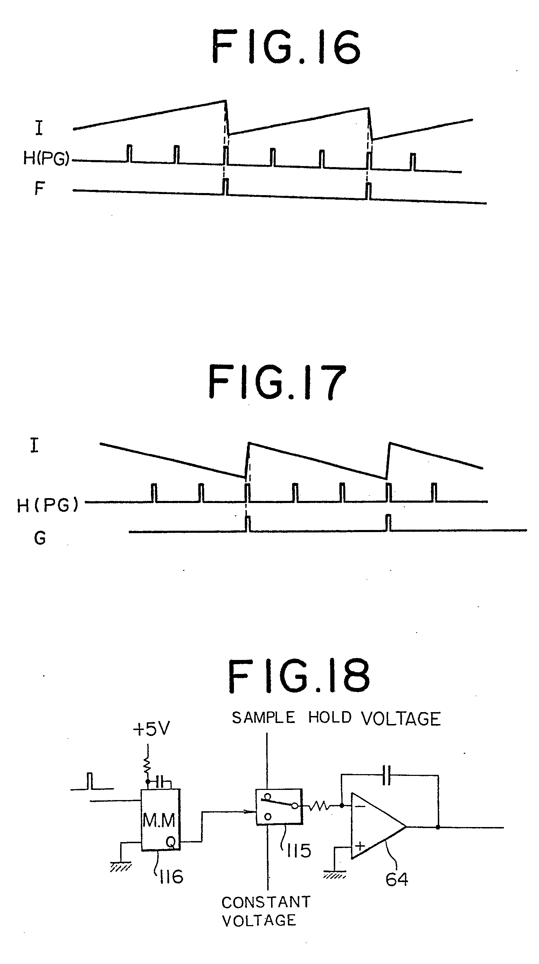

With this tracking control circuit, if track deviation takes place at a reduced or increased tape speed so that the block synchronization signal can no longer be reproduced, the output of the integrator 64 is held at the plus or minus maximum value. In such a case, the tracking can no longer be effected even after the normal tape speed is subsequently recovered. Accordingly, X and Y circuits are provided in the circuit of Figure 15, so that when the integrator output I has a positive slope, the X circuit is used to let an amplifier 111 detect a voltage above +5 V as shown in Figure 16, for discharging a capacitor 113 for the integrator 64 in synchronism with the pulse output of the pulse generator detecting the rotation of the rotary head assembly. On the other hand, when the integrator output I has a negative slope, the Y circuit is used to let an operational amplifier 114 detect a voltage below −5 V for discharging the capacitor 113 in synchronism with the pulse generator output pulse. With this arrangement, the output of the integrator 64 will not assume an extreme value, so that tracking can readily be effected when it becomes possible to reproduce the block synchronization signals.

In this tracking control circuit, when the block synchronization signal is not reproduced, the slope of the output of the integrator 64 is determined by the output of the sample/hold circuit 56. In this case, therefore, the time until tracking locks in after the normal speed is recovered is likely to be extended. A circuit shown in Figure 18 prevents such an extension of time. In this circuit, a selection switch 115 is provided between the sample/hold circuit 56 and the integrator 64 and is controlled by a monostable multivibrator 116. The block synchronization signal SYNC₁ or SYNC₂ or delayed output signal as shown in Figure 13 is supplied to the monostable multivibrator 116. Thus, when the block synchronization signal is reproduced, the quotient output Q of the monostable multivibrator 116 rises to cause the selection switch 115 to couple the output of the sample/hold circuit to the integrator 64. When the block synchronization signal is not reproduced, a constant voltage is supplied through the selection switch 115 to the integrator 64. Thus, a constant slope is always achieved, so that when the constant speed is recovered, the servo can be immediately applied.

By selecting the time constant of the monostable multivibrator 116 to be high enough to correspond to several block synchronization signals, the selection switch 115 can be held without being switched to the constant voltage side even if the guard band is partly scanned by the rotary head assembly.

While either the block synchronization signal SYNC₁ or SYNC₂ or a delayed output is supplied to the monostable multivibrator 116, it is advantageous to select the delayed output for it always corresponds to the sample hold signal produced.

## Claims

1. A tracking control arrangement for a magnetic reproducing device, the arrangement comprising:

. a magnetic tape (2) having slant tracks (TRa, TRb) in which is recorded a television signal including synchronization signals;

drive means for driving said tape (2);

at least two reproducing magnetic heads (1A, 1B) for simultaneously scanning different slant tracks (TRa, TRb) recorded on said tape (2), said reproducing magnetic heads (1A, 1B) having respective different azimuth angles;

phase detecting means (56) for detecting a phase error between signals reproduced by said two reproducing magnetic heads (1A, 1B); and

controlling means (57) for controlling the positions of said tracks (TRa, TRb) and said reproducing magnetic heads (1A, 1B) relative to one another in dependence on said phase error;

characterised by: a digital television signal including block synchronization signals to be utilized when effecting digital-to-analog conversion of said digital television signals after reproduction;

said digital television signal having been split into first and second channels for recording simultaneously two channel signals by respective magnetic heads of different azimuth angles, and each said reproducing magnetic head (1A, 1B) being arranged to reproduce a respective channel;

a first said phase locked loop (321) for forming a first clock signal from said reproduced signal of said first channel;

first means (323) for extracting said block synchronization signals from said reproduced signal of said first channel under control of said first clock signal;

a second said phase locked loop (321) for forming a second clock signal from said reproduced signal of said second channel;

second means (323) for extracting said block synchronization signals from said reproduced signal of said second channel under control of said second clock signal; and

means (51A, 51B) for supplying said extracted block synchronization signals to said phase detecting means (56) to detect said phase error.

2. A tracking control arrangement according to claim 1 wherein said phase detecting means (56) includes a sample/hold circuit (56).

3. A tracking control arrangement according to claim 2 wherein said block synchronization signals extracted from said reproduced signal of said first channel are supplied to a monostable multivibrator (52), the output of which is supplied via a trapezoidal-wave-forming circuit (54) to said sample/hold circuit (56) and directly to one input of a two-input AND gate (55), and said block synchronization signals extracted from said reproduced signal of said second channel are supplied via a delay circuit (53) to the second input of said AND gate, the output of which is supplied to said sample/hold circuit (56).

4. A tracking control arrangement according to claim 2 or claim 3 wherein the output of said sample/hold circuit (56) is supplied by way of an integrator (64 in Fig. 15) to said controlling means (101), and means (115) is provided to substitute a constant voltage for the output of said sample/hold circuit (56) for supply to said controlling means (101) on temporary loss of said extracted block synchronization signals.

5. A tracking control arrangement according to claim 4 wherein said means (115) to substitute a constant voltage is a switch (115) which is controlled by the output of a monostable multivibrator (116) to which said extracted block synchronization signals are supplied.

6. An arrangement according to any one of claims 1—3 further comprising head deflection means (3) for reproducing deflecting said magnetic heads (1A, 1B) in the direction perpendicular to the longitudinal direction of said tracks (TRa, TRb) under control of said controlling means (57 in Fig. 12).

## Patentansprüche

1. Spurlageüberwachungsanordnung für eine magnetische Wiedergabeeinrichtung, mit einem Magnetband (2), auf dem in Schrägspuren (TRa, TRb) ein Synchronisiersignale enthaltendes Fernsehsignal aufgezeichnet ist, mit einer für den Antrieb des Bandes (2) vorgesehenen Antriebseinrichtung, mit zumindest zwei Wiedergabe-Magnetköpfen (1A, 1B) für die gleichzeitige Abtastung verschiedener, auf dem betreffenden Band (2) aufgezeichneter Schrägspuren (TRa, TRb), wobei die betreffenden Wiedergabe-Magnetköpfe (1A, 1B) unterschiedliche Azimuthwinkel aufweisen, mit einer Phasendetektoreinrichtung (56) für die Ermittlung eines Phasenfehlers zwischen Signalen, die von den beiden Wiedergabe-Magnetköpfen (1A, 1B) wiedergegeben werden,

und mit einer Steuereinrichtung (57) für die Steuerung der relativen Lagen der Spuren (TRa, TRb) und der Wiedergabe-Magnetköpfe (1A, 1B) zueinander in Abhängigkeit von dem betreffenden Phasenfehler, dadurch gekennzeichnet,

daß ein digitales Fernsehsignal mit Blocksynchronisationssignalen verwendet ist, die dann heranzuziehen sind, wenn auf die Wiedergabe hin eine Digital-Analog-Umsetzung der betreffenden digitalen Fernsehsignale bewirkt wird,

daß das genannte digitale Fernsehsignal in erste und zweite Kanäle für eine gleichzeitige Aufzeichnung zweier Kanalsignale durch unterschiedliche Azimuthwinkel aufweisende Magnetköpfe aufgeteilt ist,

daß jeder Wiedergabe-Magnetkopf (1A, 1B) so angeordnet ist, daß der einen entsprechenden Kanal wiedergibt,

daß eine erste phasenstarre Regelschleife (321) ein erstes Taktsignal aus dem wiedergegebenen Signal des ersten Kanals bildet,

daß eine erste Einrichtung (323) die betreffenden Blocksynchronisationssignale aus dem wiedergegebenen Signal des genannten ersten Kanals unter der Steuerung des genannten ersten Taktsignals ableitet,

daß eine zweite phasenstarre Regelschleife (321) zur Bildung eines zweiten Taktsignals aus dem wiedergegebenen Signal des betreffenden zweiten Kanals vorgesehen ist,

daß eine zweite Einrichtung (323) die Blocksynchronisationssignale aus dem wiedergegebenen Signal des betreffenden zweiten Kanals unter der Steuerung des genannten zweiten Taktsignals ableitet.

und daß Einrichtungen (51A, 51B) vorgesehen sind, die die abgeleiteten Blocksynchronisationssignale an die Phasendetektoreinrichtung (56) zur Ermittlung des genannten Phasenfehlers abg ben.

2. Spurlageüberwachungsanordnung nach Anspruch 1, wobei die Phasendetektoreinrichtung (56) eine Abtast-/Halteschlatung (56) aufweist.

3. Spurlageüberwachungsanordnung nach Anspruch 2, wobei die aus dem wiedergegebenen Signal des ersten Kanals abgeleiteten Blocksynchronisationssignale an einen monostabilen Multivibrator (52) abgegeben werden, dessen Ausgangssignal über eine eine Trapezwelle formende Schaltung (54) an die Abtast-/Halteschaltung (56) und direkt an einen Eingang eines zwei Eingänge aufweisenden UND-Gliedes (55) abgegeben wird,

und wobei die aus dem wiedergegebenen Signal des zweiten Kanals abgeleteten Blocksynchronisationssignale über eine Verzögerungsschaltung (53) an den zweiten Eingang des genannten UNS-Gliedes abgegeben werden, dessen Ausgangssignal an die genannte Abtast-/Halteschaltung (56) abgegeben wird.

4. Spurlageüberwachungsanordnung nach Anspruch 2 oder 3, wobei das Ausgangssignal der genannten Abtast-/Halteschaltung (56) über einen Integrator (64 in Fig. 15) an die Steuereinrichtung (101) abgegeben wird

und wobei eine Einrichtung (115) vorgesehen ist, die als Ersatz des Ausgangssignals der Abtast-/Halteschaltung (56) eine konstante Spannung abgibt, welche der betreffenden Steuereinrichtung (101) auf einen kurzzeitigen Verlust der genannten abgeleiteten Block-synchronisationssignale hinzugeführt wird.

5. Spurlageüberwachungsanordnung nach Anspruch 4, wobei die eine konstante Spannung als Ersatzspannung abgebende Einrichtung (115) ein Schalter (115) ist, der durch das Ausgangssignal eines monostabilen Multivibrators (116) gesteuert wird, dem die abgeleiteten Blocksynchronisationssignale zugeführt werden.

6. Anordnung nach einem der Ansprüche 1 bis 3, mit einer Kopf-Ablenkeinrichtung (3) für die Vornahme einer Ablenkung der betreffenden Magnetköpfe (1A, 1B) in der rechtwinklig zur Längsrichtung der betreffenden Spuren (TRa, TRb) verlaufenden Richtung unter der Steuerung der betreffenden Steuereinrichtung (57 in Fig. 12).

**Revendications**

1. Dispositif de commande d'alignement pour un dispositif de reproduction magnétique, le dispositif comprenant une bande magnétique (2) portant des pistes inclinées (TRa, TRb) dans lesquelles est enregistré un signal de télévision contenant des signaux de synchronisation, un dispositif d'entrainement de ladite bande (2), au moins deux têtes magnétiques de reproduction (1A, 1B) pour explorer simultanément des pistes inclinées différentes (TRa, TRb) enregistrées sur ladite bande (2), les têtes magnétiques de reproduction (1A, 1B) ayant des angles d'azimuts différents respectifs, un dispositif de détection de phase (56) pour détecter une erreur de phase entre des signaux reproduits par lesdites deux têtes de reproduction magnétique (1A, 1B) et un dispositif de commande (57) pour commander les positions desdites pistes (TRa, TRb) et desdites têtes magnétiques de reproduction (1A, 1B) les unes par rapport aux autres en fonction de ladite erreur de phase, caractérisé par un signal de télévision numérique comprenant des signaux de synchronisation de blocs qui sont utilisés en effectuant une conversion mumérique-analogique dudit signal numérique de télévision après la reproduction, ledit signal de télévision ayant été séparé en un premier et un second canaux, pour l'enregistrement simultané de deux signaux de canaux par des têtes magnétiques respectives d'angles d'azimuts différents et chacune desdites têtes magnétiques de reproduction (1A, 1B) étant agencée pour reproduire un canal respectif, une première boucle à verrouillage de phase (321) pour former un premier signal d'horloge à partir dudit signal reproduit du premier canal, un premier dispositif (323) pour extraire lesdits signaux de synchronisation de bloc dudit signal reproduit dudit premier canal à la commande dudit premier signal d'horloge, une seconde boucle à verrouillage de phase (321) pour former un second signal d'horloge à partir dudit signal reproduit dudit second canal, un second dispositif (323) pour extraire lesdits signaux de synchronisation de bloc dudit signal reproduit dudit second canal à la commande dudit second signal d'horloge, et un dispositif (51A, 51B) pour appliquer lesdits signaux de synchronisation de bloc extraits audit dispositif de détection de phase (56) pour détecter ladite erreur de phase.

2. Dispositif de commande d'alignement selon la revendication 1, dans lequel ledit dispositif de détection de phase (56) comporte un circuit d'échantillonnage et maintien (56).

3. Dispositif de commande d'alignement selon la revendication 2, dans lequel lesdits signaux de synchronisation de blocs extraits dudit signal reproduit dudit premier canal sont appliqués à un multivibrateur monostable (52) dont la sortie est transmise par un circuit conformateur trapézoïdal (54) audit circuit d'échantillonnage et maintien (56) et directement à une entrée d'une porte ET (55) à deux entrées, et lesdits signaux de synchronisation de bloc extraits dudit signal reproduit dudit second canal sont fournis par un circuit à retard (53) à la seconde entrée de ladite porte ET dont la sortie est appliquée audit circuit d'échantillonnage et maintien (56).

4. Dispositif de commande d'alignement selon la revendication 2 ou la revendication 3, dans lequel la sortie dudit circuit d'échantillonnage et maintien (56) est appliquée par un intégrateur (64) de la Figure 15 audit dispositif de commande (101) et un dispositif (115) étant prévu pour substituer une tension constante à la sortie dudit circuit d'échantillonnage et maintien (56) pour son application audit dispositif de commande (101) dans le cas d'une perte temporaire desdits signaux de synchronisation de bloc extraits.

5. Dispositif de commande d'alignement selon la revendication 4, dans lequel ledit dispositif (115) qui substitue une tension constante est un commutateur (115) qui est commandé par la sortie d'un multivibrateur monostable (116) auquel sont appliqués lesdits signaux de synchronisation de bloc extraits.

6. Dispositif selon l'une quelconque des revendications 1 à 3, comprenant en outre un dispositif de déviation de têtes (3) pour dévier à la reproduction lesdites têtes magnétiques (1A, 1B) dans la direction perpendiculaire à la direction longitudinale desdites pistes (TRa, TRb) à la commande dudit dispositif de commande (57) sur la Figure 12.

# FIG.1

# FIG.2

# FIG.3

IA
IB
g1
g2

g1
IA
IB
g2

# FIG.4

TRa  TRb  TRa TRb

DIRECTION OF TAPE

DIRECTION OF ROTARY HEAD

2

TRc

# FIG.5

INPUT PROCESSOR — 12

A/D CONVERTER — 13

INTERFACE CIRC. — 14

TIME COMP. CIRC. — 15A

ERROR CORRECTION ENCODER — 16A

REC. PROCESSOR — 17A

REC. AMP. — 18A

1A

TIME COMP. CIRC. — 15B

ERROR CORREC. ENCODER — 16B

REC. PROCESSOR — 17B

REC. AMP. — 18B

1B

MASTER CLK CIRC. — 21

CTL SIG FORMING CIRC. — 22

11

2

0 0040 066

# FIG.8

SB

| SYNC | ID AD | DATA ( 1/3 OF ONE LINE ) | CRC |
|------|-------|--------------------------|-----|
| 24BITS | 16BITS | 768 BITS (96 SAMPLINGS) | 32 BITS |

·— 1 SUB—BLOCK (840 BITS·105 SAMPLINGS) —·

# FIG.6

### ODD LINES    EVEN LINES

Bs    HD    576    Bs    HD    16  92    576    15    90

— 682.5 SAMPLINGS ×2 —

# FIG.7

HORIZONTAL PARITY DATA

| | SB1 | SB2 | SB3 | SB4 | SB5 | SB6 | SB7 | SB8 | SB9 | | SB34 | SB35 | SB36 | SB37 | SB38 | SB39 |
|---|-----|-----|-----|-----|-----|-----|-----|-----|-----|---|------|------|------|------|------|------|
| | 40 | 41 | 42 | 43 | 44 | 45 | 46 | 47 | 48 | | 73 | 74 | 75 | 76 | 77 | 78 |
| | 79 | 80 | 81 | 82 | 83 | 84 | 85 | 86 | 87 | | 112 | 113 | 114 | 115 | 116 | 117 |
| | 742 | 743 | 744 | 745 | 746 | 747 | 748 | 749 | 750 | | 775 | 776 | 777 | 778 | 779 | 780 |
| | 781 | 782 | 783 | 784 | 785 | 786 | 787 | 788 | 789 | | 814 | 815 | 816 | 817 | 818 | 819 |
| | 820 | 821 | 822 | 823 | 824 | 825 | 826 | 827 | 828 | | 853 | 854 | 855 | 856 | 857 | 858 |

1 BLOCK    1 SUB—BLOCK    21    12 BLOCKS

VERTICAL PARITY DATA

3

# FIG.9

REPRO. AMP. (31A) → REPRO. PROCESSOR (32A) → TBC (33A) → ERROR DECODER (34A) → EXPANSION CIRC. (35A)

1A

REPRO. AMP. (31B) → REPRO. PROCESSOR (32B) → TBC (33B) → ERROR DECODER (34B) → EXPANSION CIRC. (35B)

1B

→ INTERFACE (36) → D/A CONVERTER (37) → OUTPUT PROCESSOR (38) → 39

# FIG.10

# FIG.11

# FIG.12

# FIG.13

SYNC₁

SYNC₂

DELAYED OUTPUT

M.M. OUTPUT

OUTPUT SIGNAL

TRAPEZOIDAL
WAVEFORM SIGNAL

HOLD OUTPUT

# FIG.14

1 FIELD

FLYBACK SIGNAL FOR A
STILL REPRODUCTION MODE

2 FIELDS

FLYBACK SIGNAL FOR THE
1/2 SPEED REPRODUCTION MODE

0 040 066

FIG.15

# FIG.16

# FIG.17

# FIG.18

SAMPLE HOLD VOLTAGE

+5V

M.M

116

115

CONSTANT
VOLTAGE

64